Europäisches Patentamt

European Patent Office

Office européen des brevets

(19)

(11) Publication number : **0 605 355 A1**

## (12) EUROPEAN PATENT APPLICATION

(21) Application number : 93500176.8

(22) Date of filing : 29.12.93

(51) Int. Cl.[5] : **G01N 21/64, C09K 11/06**

(30) Priority : 30.12.92 ES 9202641

(43) Date of publication of application :
06.07.94 Bulletin 94/27

(84) Designated Contracting States :
AT BE CH DE DK ES FR GB IT LI NL SE

(71) Applicant : UNIVERSIDAD DE OVIEDO
Calle San Francisco, 3
E-33003 Oviedo (ES)

(72) Inventor : Sanz-Medel, Alfredo
Urb. Parque Somio, 15
E-33203 Gijon (ES)
Inventor : Pereiro, Rosario
El Casal, 45
E-33930 Barros, La Felguera (ES)
Inventor : Diaz, Marta E.
Santa Apolonia, 118
E-33400 Avilés (ES)
Inventor : Liu, Yi-Ming
Edificio FICYT
E-33428 Cayés, Llanera (ES)

(74) Representative : Ibanez, José Francisco
Rodriguez San Pedro, 10
E-28015 Madrid (ES)

(54) Oxygen-quenchable phosphorescent materials and their applications in oxygen sensing.

(57) An oxygen-quenchable phosphorescent metal-ferron complex formed by at least an ion aluminium complexed with at least a ferron molecule. Said metal-ferron complexes can be immobilised on a solid support, such as an ion-exchange resin. From said complexes an oxygen optosensor, a flow-injection analysis system and an oxygen monitoring method based on room temperature phosphorescence lifetime determination are achieved. Application in biomedical analysis.

EP 0 605 355 A1

The invention relates to oxygen-quenchable phosphorescent metal-ferron complexes for the detection and measurement of oxygen in gas mixtures and liquid samples, which are useful in the scientific field and, particularly, for medical applications. These metal-ferron complexes, when protected by organised means, such as micelles or vesicles, within a solution or immobilised onto a solid matrix, such as an ionexchange resin, exhibit sensitively oxygen-quenchable room temperature phosphorescence (RTP). The invention also relates to a method for the effective and simple immobilization of said materials onto solid supports by an ion-exchange process. The invention further comprises an analytic method for the detection and monitoring of oxygen, based on the measurement of RTP lifetime of said materials, and a flow-injection analysis system (FIA) which makes use of an oxygen sensor, also according to the invention, as a transducer in oxygen-mediated biosensing reactions.

## Background of the invention

Oxygen concentration measurement in gas mixtures, aqueous samples and biological fluids is an essential and most frequent practice in analytical laboratories, process plants and medical centers. Currently, the most widely used method for continuously determining and monitoring oxygen concentration is an electrochemical sensor based on Clark's electrode. However, electrochemical sensors have some drawbacks, such as constant bias (i.e. due to electrode fouling), lack of reproducibility, unavoidable electrical connection to patients, need of a steady-state supply of oxygen to the sensor surface, and the like. Consequently, alternative technical solutions have been searched, such as optical oxygen sensors.

Advantages of the optical sensors, particularly those based on optical fibers, are their potential small size, inertness and high flexibility of the fiber, being all these characteristics greatly desired for in-vivo applications.

Almost every oxygen optical sensor described so far is based on the fluorescence intensity decay of a suitable indicator when quenched by molecular oxygen (which in its fundamental state is a triplet). In the last years different fluorescent probes and indicators have been disclosed as suitable for oxygen sensing, for example those described in EP-A-0190829 and EP-A-0252578 patents. Polycyclic aromatic hydrocarbons and their derivatives are most commonly used for two main reasons: a) their luminiscence is efficiently oxygen-quenched, and b) are fairly soluble in a silicone matrix, which in turn is highly permeable to oxygen.

The main disadvantages of said fluorescence-quenching based oxygen sensors are their insufficient sensitivity, which leads to poor accuracy in some important cases, and the high background signals, which still further deteriorate the detection limits. In fact, the analytical signal detected when using fluorescent oxygen sensors is made of, to a great extent, background noise in addition to the oxygen-quenched luminiscence signal. This background noise comes from the reflections of the incident light and from the broadband luminiscence generated by other elements of the system, such as the optical fiber and/or the polymeric matrix used in the manufacture of the sensor (See patent EP-A-0259951).

Phosphorescence-quenching based oxygen sensors are generally more sensitive and have lesser background noise than those based on fluorescence. Oxygen-quenchable phosphorescent indicators show long-lived phosphorescence emissions and so a delayed measurement of the luminiscence is possible after the energy of the excitation source and the eventual background noise have ceased. Therefore, better sensitivity and accuracy can be obtained by the use of phosphorescence based sensors. For example, in patent EP-A-0259951 it is disclosed an oxygen-quenchable phosphorescent sensor based on lanthanide complexes and a Schiff base (or $\beta$-diketone) incorporated to a polymeric matrix.

## Summary of the invention

A general object of the invention is to provide highly sensitive oxygen-quenchable phosphorescent materials, having favourable chemical, physicochemical and spectroscopic characteristics for sensing phase construction, for example: photochemical stability, adequate excitation and emission wavelengths (400 and 600 nm, respectively) for presently available optical fiber technology, wide Stokes shifts (i.e. 200 nm) and long lifetimes of the excited state (0.3 ms approximately) in order to allow measurements with simple and low-cost instruments. Moreover, the sensing materials of the invention are relatively inexpensive and easy to prepare.

Another object of the invention is to provide a method for the easy and effective immobilization of said phosphorescent materials onto solid supports, in order to allow oxygen monitoring for different purposes and on different environments, including gas mixtures, aqueous solutions and organic solvents.

A further object of the invention is to provide a method for the detection and measurement of oxygen concentration based on the measurement of RTP lifetime of said materials.

Still further objects of the invention are the provision of an oxygen optosensor according to the materials and methods of the invention, and a flow-injection analysis system (FIA) using said oxygen optosensor as a transducer in oxygen-mediated biosensing reactions.

According to the invention those objectives are achieved by an oxygen-quenchable phosphorescent material, formed by at least a metal cation, selected from the group consisting of aluminium, gallium, indium, niobium and zirconium, complexed with at least a ferron molecule. Said material can be incorporated to a micelle solution, preferably a solution of cetyltrimethylammonium bromide (CTAB) with a concentration of CTAB higher than $1 \times 10^{-3}$ M; or a solution of vesicles, preferably a solution of dodecyldimethylammonium bromide (DDAB) with a concentration of DDAB higher than $5 \times 10^{-3}$ M; or immobilised on an ion-exchange resin, which beads are preferably disposed on a polymeric matrix formed from a silicone elastomer.

The phosphorescent materials of the invention preferably comprise at least one free $SO_3$ group.

According to the invention, a method for immobilising on a solid support an oxygen-quenchable phosphorescent material comprises the steps of:

- preparing an aqueous solution containing at least a metal cation, selected from the group consisting of aluminium, gallium, indium, niobium and zirconium, and at least a ferron molecule,
- preparing a column packed with an ion-exchange resin, previously conditioned and washed until neutral pH,
- passing said aqueous solution through the column, at a flow rate which promote the ion-exchange process,
- washing the treated ion-exchange resin with a saline solution and water, and
- removing and preserving until use as an oxygen-quenchable phosphorescent material the beads of said ion-exchange resin, which is, preferably, a strong basic anion-exchange resin.

According to the invention, a method for detecting or measuring the oxygen concentration in a sample comprises the steps of:

- contacting an oxygen-quenchable phosphorescent material, formed by at least a metal cation, selected from the group consisting of aluminium, gallium, indium, niobium and zirconium, complexed with at least a ferron molecule, being said material incorporated to
  - a micelle solution, or
  - a solution of vesicles, or immobilised on
  - an ion-exchange resin, with the oxygen containing sample to analyse, and exposing it to luminous radiation, which produces phosphorescence in said complex, and
- measuring the variations in intensity and/or lifetime of the phosphorescence emitted by said metal-ferron complex resulting from the contact with said oxygen-containing sample.

Also according to the invention, an oxygen optosensor comprises an oxygen-quenchable phosphorescent material, formed by at least a metal cation, selected from the group consisting of aluminium, gallium, indium, niobium and zirconium, complexed with at least a ferron molecule, being said material immobilised on an ion-exchange resin. Preferably, the metal-ferron complexes immobilised on the ion-exchange resin are disposed in a silicone membrane supported in the quartz window of a flow-cell, and the silicone membrane can be covered by a second teflon or polyethylene membrane.

The optosensor according to the invention, is useful for monitoring oxygen in aqueous samples, in organic solvents or in gas mixtures.

According to the invention, a system for detecting or measuring the oxygen concentration in gaseous or aqueous samples by a flow-injection analysis system comprises:

- an oxygen optosensor as above described,
- a spectrofluorimeter connected to said optosensor,
- means for processing and evaluating the signals emitted by the spectrofluorimeter,
- a flow-circuit for the sample to analyse,
- a first column, in the flow-circuit, packed with an interference-removing material for the optosensor and spectrofluorimeter, and
- a second column, also in the flow-circuit, packed with an oxidase enzyme.

The above system is also applicable for detecting or measuring the concentration of glucose in samples. In this case, the second column will be packed with a glucose-oxidase enzyme. Whatever application of the system, the optosensor works as a transducer of oxygen-mediated biosensing reactions.

The invention together with additional characteristics and advantages thereof will be best understood from the following description of embodiments of the invention when read in connection with the accompanying drawings.

**Brief description of the drawings**

Figure 1 is a diagram of an example of optosensor system for a flow of an oxygen-containing solution, according to the invention.

Figures 2 and 3 are schematic views of an example of flow-cell usable in the system of Figure 1.

Figure 4 is a graphic diagram showing the response in arbitrary units (a.u.) of an oxygen optosensor according to the invention, towards gaseous oxygen at different concentrations.

Figure 5 is a graphic diagram showing the response in arbitrary units (a.u.) of an oxygen optosensor according to the invention, towards gaseous and aqueous samples.

Figure 6 is a diagram of an example of flow injection analysis system usable in oxygen-mediated biosensing reactions, comprising an optosensor according to the invention.

## Detailed description of the invention

According to the invention, a material useful for the detection and measurement of oxygen is an oxygen-quenchable phosphorescent metal-ferron complex, both in solid and liquid form, for oxygen-sensing purposes. In solid form, the support is preferably an ion-exchange resin, while in solution form the protection of organised means, preferably micelles and vesicles, is required. In the metal-ferron complexes of the invention the metal cation is selected from Al(III), Ga(III), In(III), Nb(V) and Zr(IV).

It has been found that the above cations form stable complexes with ferron and exhibit strong room temperature phosphorescence (RTP) in the presence of micelles or vesicles, or when immobilised on ion-exchange resins. Moreover, the observed RTP emission is very sensitive to the presence of oxygen.

Also, it has been found that amongst the various types of organised means, only those positively charged, for example micelles formed by cetyltrimethylammonium bromide (CTAB) or vesicles formed by dodecyldimethylammonium bromide (DDAB), enhance the RTP emission of the metal-ferron complex, preferably aluminium-ferron. The observed RTP emission of an Al-ferron complex in solutions with organised means is extremely sensitive to the presence of oxygen.

Also, it has been ascertained that the presence of at least one free $SO_3$ group in the metal-ferron complex is essential for proper RTP emission. It is believed that the strong interactions between the $SO_3$ groups and the positive superficial potential of rigid surfaces, for example surfaces of beads of anion-exchange resins, or pseudorigid surfaces, for example positively charged micelles and vesicles, allow the complexes (or triplet) to reside in a more rigid microenvironment thus reducing the probability of collisional radiationless energy loss or deactivation of the triplets.

Furthermore, the presence of $SO_3$ functional groups in the complexes makes very easy the construction of the sensing phase by the immobilization of said phosphorescent complexes on solid supports, via an ion-exchange process. The solid supports can be anion-exchange resin beads or membranes, more specifically strongly basic anion types.

For the immobilization of the phosphorescent complexes of the invention on the anionic-exchanger, the solutions are passed by conventional pumping through a minicolumn packed with wet resin beads. Teflon or polyethylene tubings can be used for supplying the minicolumn with the flow of solutions from a reservoir.

The following example describes a preferred embodiment of the process for preparing an oxygen sensing material according to the invention.

## Example

Preparation of an Al-ferron complex immobilised on beads of an ion-exchange resin.

In a flask of 100 ml of capacity, 0.3 ml of a solution of Al(III) (1g·ml$^{-1}$), 25 ml of a solution of ferron (Fluka AG, Switzerland) $3 \times 10^{-3}$ M, and 10 ml of buffer solution of pH 5.5 acetic acid/sodium acetate are added. The solutions are mixed and water is added until full capacity of the flask. The flow-circuit (teflon tubing) for a minicolumn packed with 0.25 ml of strong basic anion-exchange resin (Dowex 1x2-400, Sigma) is first cleaned with solutions of HCl 6 M and 2 M until no atomic absorption signal from iron is observed for the eluent. Then the system is washed with water till neutral pH of the eluent. With a peristaltic pump (Gilson Minipuls 2) the solution of Al-ferron complex previously prepared is passed through the minicolumn packed with the resin, at an average flow rate of 1 ml/min. The resin is washed with a solution of NaCl 1 M and then with distilled water. The so treated beads of resin (oxygen indicator) are removed and preserved in distilled water until use. (End of the example).

The RTP producing complexes thus immobilised on the anion-exchange resin do not leach out by water nor by common organic solvents (ethanol, acetone, etc.). Moreover, the RTP emission from the resulting indicator is very sensitive to the presence of oxygen. For monitoring the oxygen, the resin beads activated with the adsorbed complex (sensing phase) can be directly used in liquid solutions or disposed in solid polymeric membranes.

The activated resin beads when exposed to aqueous solutions or when dispersed in hydrophobic solid matrixes, respond to molecular oxygen with different sensivity. By using the luminiscence ratios of nitrogen saturated samples compared to air saturated samples the sensivity of a luminiscent oxygen sensor can be evaluated. The activated resin beads when staying in contact with water exhibit an extremely high sensivity to oxygen (the intensity ratio is higher than 1000) which makes them most suitable for oxygen sensing at very low levels or, alternatively, for detecting very small variations in oxygen concentration (as it is the case for oxygen-mediated biosensing applications). By dispersing the resin beads in an oxygen permeable hydrophobic polymeric matrix, the luminiscence ratio decrease to values around 10, still suitable for many in-vivo medical applications. It has been found that the oxygen sensivity of a sensor based on metal-ferron complexes dispersed in a solid polymeric matrix depends upon several factors, for example: the nature of the complex, the resin, the polymeric matrix and the concentration of active material in the solid matrix. These factors can be modified in order to obtain a specific oxygen sensivity for a determined application.

The invention also refers to a method for detecting or measuring the oxygen concentration in a sample, based on phosphorescence lifetime measurements.

In analytical chemistry the drift problems of the optic signal has been often solved by methods such as the two-wawelength referencing method in which analytical signals are recorded and ratioed at two selected wawelengths. However, the application of such methods normally imply very complicated optic systems. A luminiscence lifetime based optical sensor comprises an internal reference system which provides some decisive advantages relating to the performance of the sensor. For example, the luminiscence decay time is independent of the luminophore concentration, what turns negligible the signal drift due to leaching and photobleaching of the sensitive reagent. Moreover, the drift problems arising from excitation source intensity and photodetector sensivity fluctuations are also overcome since no absolute luminiscence intensity is measured.

The sensing method of the invention presents particular advantages when compared to existing fluorescence lifetime measurement based oxygen sensing systems. Provided that the lifetime phosphorescence emission of the metal-ferron complexes of the invention is relatively long (more than 0.2 ms), very reproducible lifetime measurement results can be obtained with relatively simple opto-electronic devices, what is highly desirable or essential for compact and inexpensive fiber optic sensing systems.

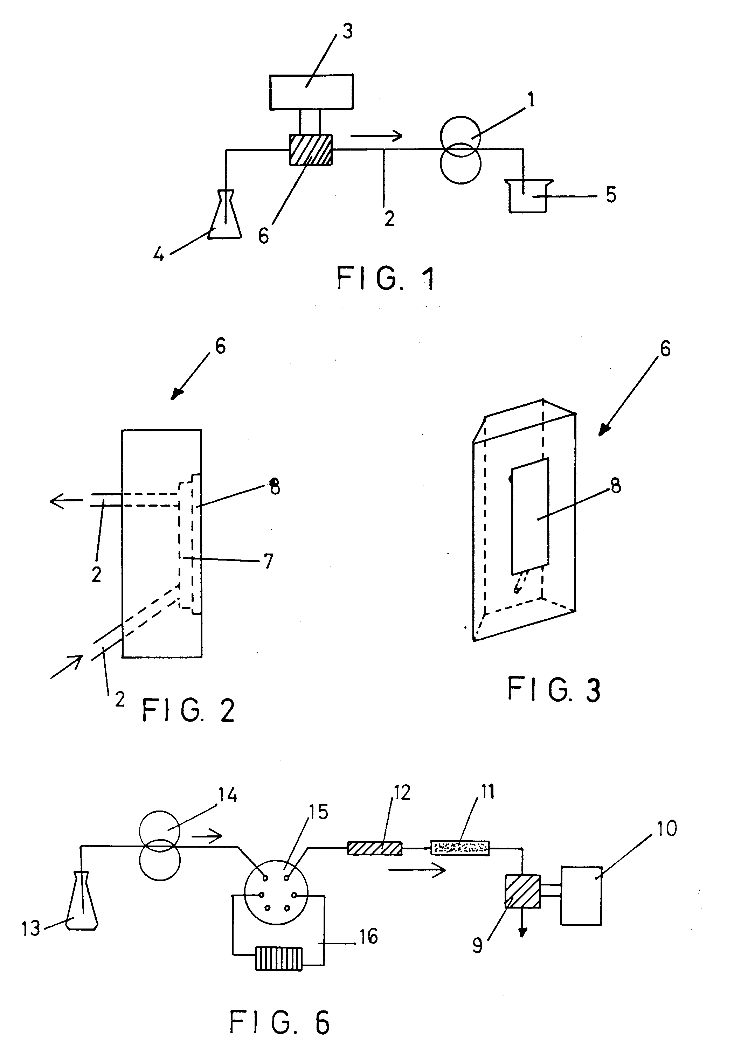

Figure 1 represents and example of embodiment of the method of the invention for forming an optosensor system destined to dissolved-oxygen measurement in liquid solutions. The basic flow system is constituted by a peristaltic pump (1) and a polyethylene tubing (2) (internal diameter 1 mm). A commercially available spectrofluorimeter (3) (for example Perkin Elmer LS 5) can be used for all RTP intensity and lifetime measurements of a solution in a reservoir (4) which flows through the system and is collected in reservoir (5).

In the sample holder of the spectrofluorimeter (3) is fitted a flow-cell (6), for example as represented in Figures 2 and 3. The flow-cell (6) is suitable for oxygen monitoring in both gaseous and liquid samples circulating through tubing (2). A sensing membrane (7) is directly adhered to the inner face of the quartz window (8) of the flow-cell. The sensing membrane (7) will be formed by an Al-ferron complex binding ion-exchange resin beads in a silicone membrane of 50 μm approximately thick. Known methods for preparing such active membranes can be employed, for example those described in M.E. Lippitsch et al. "Fibre-optic oxygen sensor with the fluorescence decay time as the information carrier", Analytica Chimica Acta, 1988, vol, 205, pp 1-6. The RTP emission produced in the flow-cell (6) is monitored at 600 nm, with an excitation wawelength of 390 nm and a delay time of 0.4 ms and a gate time of 2 ms. Delay time is defined as the time elapsed from the beginning of the initial pulse to the beginning of the observation, and gate time is the time during which the cell (6) is receiving the luminiscence radiation to be integrated.

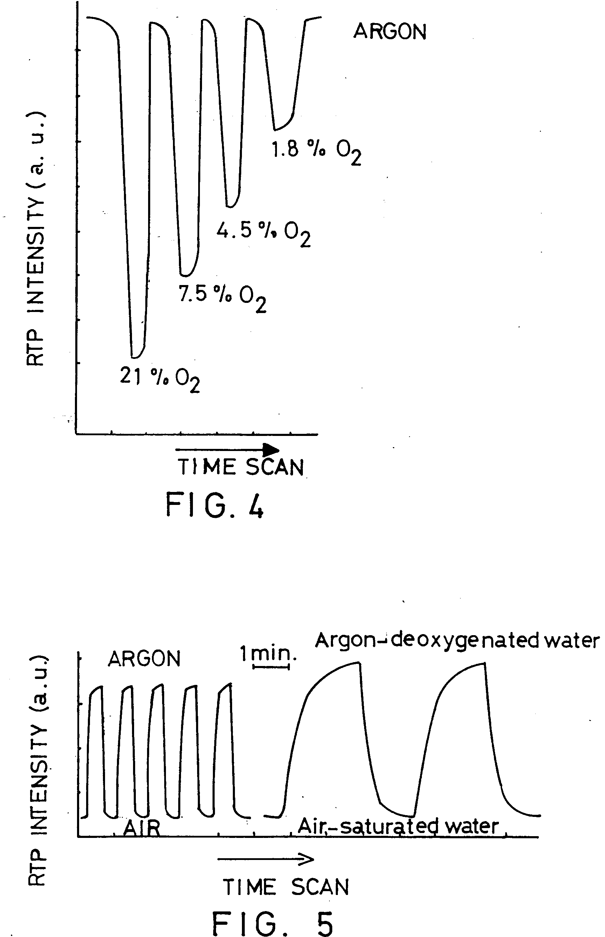

Figures 4 and 5 are graphic diagrams showing examples of average responses of the sensor system of the invention. For gaseous samples (Figure 4) the response time for a full signal change is about 20 seconds, and for solution samples (Figure 5) such response time is about 2.5 minutes. No histeresis effects were observed in both cases.

The classic Stern-Volmer equation is used to determine the partial pressure of oxygen from the RTP intensities and/or lifetimes measured. The relation is defined by

$$I_o/I = K_{SV}[O_2] \text{ (for intensities)}$$
or
$$\tau_o/\tau = K'_{SV}[O_2] \text{ (for lifetimes)}$$

where $I_o$ and $\tau_o$ are the RTP intensity and lifetime with no oxygen present, and I and $\tau$ the intensity and lifetime in the presence of oxygen, respectively. $K_{SV}$ and $K'_{SV}$ are Stern-Volmer constants. $[O_2]$ is the oxygen concentration in percentage. It has been observed that an oxygen sensing system according to the invention has a Stern-Volmer $K_{SV}$ constant greater than $0.2\%^{-1}$, approximately.

Still another object of the invention is a FIA system suitable for the construction of biosensing devices employing the oxygen optosensor based on RTP of the invention, as a transducer of oxygen-mediated biosensing reactions. The FIA system comprises a RTP oxygen-quenchable sensor and two minicolumns, one containing an oxidase enzyme and another called pretreatment minicolumn. The pretreatment column is destined to remove on-line any interference from the injected sample solution, such as heavy metal cations.

An example of embodiment of a FIA system according to the invention is represented in Figure 6. The material of the RTP oxygen-quenchable sensor (9) can be prepared by packing an Al-ferron complex immobilised on beads of an ion-exchange resin in a commercially available flow-cell connected to an also commercially available spectrofluorimeter (10). The minicolumn (11) with the enzyme, for example glucose-oxidase if the system will be used as a glucose sensor, is connected to the inlet of the oxygen sensor (9). Known methods for the incorporation of the enzyme can be used, for example G.D. Moody et al., "Amperometric enzyme electrode for the flow injection analysis of glucose", Analyst (London), 1986, vol. 111, pp. 607-609. The pretreatment column (12) contains, for example, an ion-exchange resin (Chelex 100, Sigma) previously conditioned, but any other interference-removing material could be used according to the interference to avoid.

The system is fed with a determined carrier solution (for example acetic acid/sodium acetate, pH 5.8) from a reservoir (13) by a peristaltic pump (14), and a rotary valve (15) and a sample loop (16) of 100 μl are used for introduction of the solution sample.

An advantageous feature of the FIA system of the invention is that the oxygen optosensor (9) can be renewed easily. By simply disconnecting the two minicolumns (11,12), feeding through the valve (15) a solution of Al-ferron (for example 2 ml) prepared as above-mentioned, and continuously pumping the carrier solution through sensor (9), for example during 10 minutes, the oxygen optosensor will be prepared for a new utilization.

## Claims

1.- An oxygen-quenchable phosphorescent material formed by at least a metal cation, selected from the group consisting of aluminium, gallium, indium, niobium and zirconium, complexed with at least a ferron molecule.

2.- An oxygen-quenchable phosphorescent material, according to the preceding claim, incorporated to a micelle solution.

3.- An oxygen-quenchable phosphorescent material, according to the preceding claim, wherein the micelle solution is a solution of cetyltrimethylammonium bromide (CTAB) with a concentration of CTAB higher than $1 \times 10^{-3}$ M.

4.- An oxygen-quenchable phosphorescent material, according to claim 1, incorporated to a solution of vesicles.

5.- An oxygen-quenchable phosphorescent material, according to the preceding claim, wherein the solution of vesicles is a solution of dodecyldimethylammonium bromide (DDAB) with a concentration of DDAB higher than $5 \times 10^{-3}$ M.

6.- An oxygen-quenchable phosphorescent material, according to claim 1, immobilised on a solid support which is an ion-exchange resin.

7.- An oxygen-quenchable phosphorescent material, according to the preceding claim, wherein the beads of ion-exchange resin are disposed on a polymeric matrix formed from a silicone elastomer.

8.- An oxygen-quenchable phosphorescent material, according to any preceding claim comprising at least one free $SO_3$ group.

9.- A method for immobilising on a solid support an oxygen-quenchable phosphorescent material comprising the steps of:
- preparing an aqueous solution containing at least a metal cation, selected from the group consisting of aluminium, gallium, indium, niobium and zirconium, and at least a ferron molecule,
- preparing a column packed with an ion-exchange resin, previously conditioned and washed until neutral pH,
- passing said aqueous solution through the column, at a flow rate which promote the ion-exchange process,
- washing the treated ion-exchange resin with a saline solution and water, and
- removing and preserving until use the beads of said ion-exchange resin.

10.- A method, according to the preceding claim, wherein the ion-exchange resin is a strong basic anion-exchange resin.

11.- A method for detecting or measuring the oxygen concentration in a sample comprising the steps of:
- contacting an oxygen-quenchable phosphorescent material, formed by at least a metal cation, selected from the group consisting of aluminium, gallium, indium, niobium and zirconium, complexed with at least a ferron molecule, being said material incorporated to
  - a micelle solution, or
  - a solution of vesicles, or immobilised on
  - an ion-exchange resin,
  with the oxygen-containing sample to analyse, and exposing it to luminous radiation, which produces phosphorescence in said complex, and

- measuring the variations in intensity and/or lifetime of the phosphorescence emitted by said metal-ferron complex resulting from the contact with said oxygen-containing sample.

12.- An oxygen optosensor comprising an oxygen-quenchable phosphorescent material formed by at least a metal cation, selected from the group consisting of aluminium, gallium, indium, niobium and zirconium, complexed with at least a ferron molecule, being said material immobilised on an ion-exchange resin.

13.- An oxygen optosensor, according to the preceding claim, wherein the metal-ferron complexes immobilised on the ion-exchange resin are disposed in a silicone membrane supported in the quartz window of a flow-cell.

14.- An oxygen optosensor, according to the preceding claim, wherein the silicone membrane is covered by a second teflon or polyethylene membrane.

15.- Use of the optosensor of claims 12 to 14 for monitoring oxygen in aqueous samples.

16.- Use of the optosensor of claims 12 to 14 for monitoring oxygen in organic solvents.

17.- Use of the optosensor of claims 12 to 14 for monitoring oxygen in gas mixtures.

18.- A system for detecting or measuring the oxygen concentration in gaseous or aqueous samples by a flow-injection analysis system comprising:

- an oxygen optosensor according to claims 12 to 14,
- a spectrofluorimeter connected to said optosensor,
- means for processing and evaluating the signals emitted by the spectrofluorimeter,
- a flow-circuit for the sample to analyse,
- a first column, in the flow-circuit, packed with an interference-removing material for the optosensor and spectrofluorimeter, and
- a second column, also in the flow-circuit, packed with an oxidase enzyme.

**19.-** A system for detecting or measuring the concentration of glucose in samples by a flow-injection analysis system comprising:

- an oxygen optosensor according to claims 12 to 14,
- a spectrofluorimeter connected to said optosensor,
- means for processing and evaluating the signals emitted by the spectrofluorimeter,
- a flow-circuit for the sample to analyse,
- a first column, in the flow-circuit, packed with an interference-removing material for the optosensor and spectrofluorimeter, and
- a second column, also in the flow-circuit, packed with a glucose-oxidase enzyme.

**20.-** Use of the optosensor of claims 12 to 14, in a flow-injection analysis system, as transducer of oxygen-mediated biosensing reactions.

**21.-** Use of the optosensor of claims 12 to 14, in a flow-injection analysis system, as transducer in glucose monitoring.

FIG. 1

FIG. 2

FIG. 3

FIG. 6

FIG. 4

FIG. 5

**European Patent Office**

# EUROPEAN SEARCH REPORT

Application Number

EP 93 50 0176

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | ANALYTICA CHIMICA ACTA, vol.212, 1988, AMSTERDAM pages 235 - 243 M.R.FERNANDEZ DE LA CAMPA ET AL. 'ROOM-TEMPERATURE LIQUID PHOSPHORIMETRY OF THE ALUMINIUM-FERRON CHELATE IN MICELLAR MEDIA' * page 235 * * page 239, line 1 - line 4 * --- | 1-3 | G01N21/64 C09K11/06 |
| A | US-A-3 612 866 (B.STEVENS) * claims 1-3 * --- | 1 | |
| A,D | EP-A-0 259 951 (C.R.BARD) * claims 1,19,72 * ----- | 1 | |
| | | | TECHNICAL FIELDS SEARCHED (Int.Cl.5) |
| | | | G01N |

The present search report has been drawn up for all claims

| Place of search | Date of completion of the search | Examiner |
|---|---|---|
| THE HAGUE | 18 April 1994 | Van den Bulcke, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)